# EUROPEAN PATENT SPECIFICATION

(11) **EP 2 150 326 B1**
(45) Date of publication and mention of the grant of the patent: **30.10.2013**
(21) Application number: 07748539.9
(22) Date of filing: 30.05.2007
(51) Int. Cl.: B01D 46/12, F24F 13/28, F24F 7/00, B01D 46/00

(54) **AIR CLEANING SYSTEM FOR ONE OR SEVERAL ROOMS AND A FILTRATION UNIT FORMING PART OF THE AIR CLEANING SYSTEM**
LUFTREINIGUNGSSYSTEM FÜR EINEN ODER MEHRERE RÄUME UND EINE TEIL DES LUFTREINIGUNGSSYSTEMS BILDENDE FILTRATIONSEINHEIT
SYSTÈME DE PURIFICATION D'AIR POUR UNE OU PLUSIEURS PIÈCES, ET UNITÉ DE FILTRATION FAISANT PARTIE DU SYSTÈME DE PURIFICATION D'AIR

(43) Date of publication of application: 10.02.2010
(73) Proprietor: Jakobsson, Klas, 920 61 Slussfors (SE)
(72) Inventor: Jakobsson, Klas, 920 61 Slussfors (SE)
(74) Representative: Mossmark, Anders Lennart
(86) International application number: PCT/SE2007/050378
(87) International publication number: WO 2008/153455

(56) References cited:
- EP-A2- 0 948 992
- WO-A1-86/01430
- DE-A1- 3 901 663
- DE-U1- 9 416 406
- GB-A- 2 116 069
- GB-A- 2 146 258
- GB-A- 2 147 409
- SE-A- 0 502 634
- US-A- 2 839 153
- US-B1- 6 835 128

## Description

### TECHNICAL FIELD

The present invention relates to an air-cleaning system and to a filtering unit included in the system, according to the preambles of appended claims 1 and 3, respectively.

### BACKGROUND ART

In conventional air systems for rooms, for example in dwellings, there is generally no filtering of the air at all, since the air is generally admitted directly from outside and conveyed into each room via intake air arrangements in the external walls and window frames, which results in poor air quality and poor heat economy. Certain types of systems include a filter unit with a limited filter surface through which all of the air is made to pass, which results in high flow rates or poor utilization of the air. Another previously known and typical design has the intakes additionally placed low down in the room, while exhaust air is collected high up in the room, which creates problems whose causes have not hitherto been resolved.

For exemple, document DE3902663A1, US6835128B1 and WO 86/01430 A1 show conventional air systems.

### DISCLOSURE OF THE INVENTION

The object of the present invention is to permit a high-quality clean-air environment and good heat economy using a system that can be easily installed in most premises, even retrofitted.

Said object is achieved by means of the air-cleaning system and the filtering unit included therein, as characterized according to appended claims 1 and 3, respectively.

### DESCRIPTION OF THE FIGURES

The invention will be described in more detail below with reference to the attached drawings, in which
- Fig. 1: shows, purely mechanically, an example of the installation of an air-cleaning system according to the invention in a building,
- Fig. 2: is a perspective view of a filtering unit according to the invention, one side wall having been removed for purposes of illustration,
- Fig. 3: is a side view of the unit according to Fig. 2, likewise with one side wall removed, and
- Fig. 4: is a block diagram showing an example of the system according to the invention.

### PREFERRED EMBODIMENT

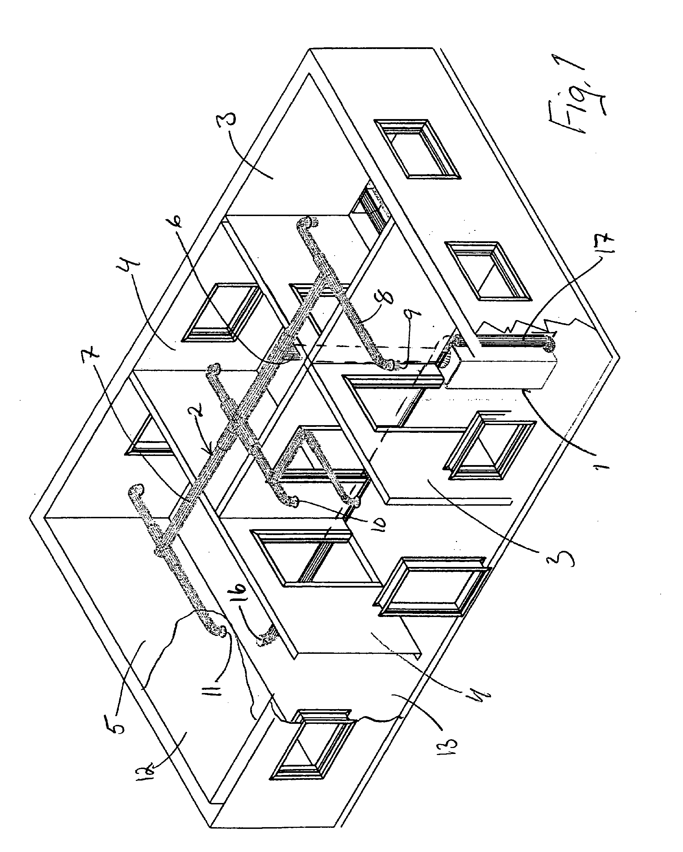

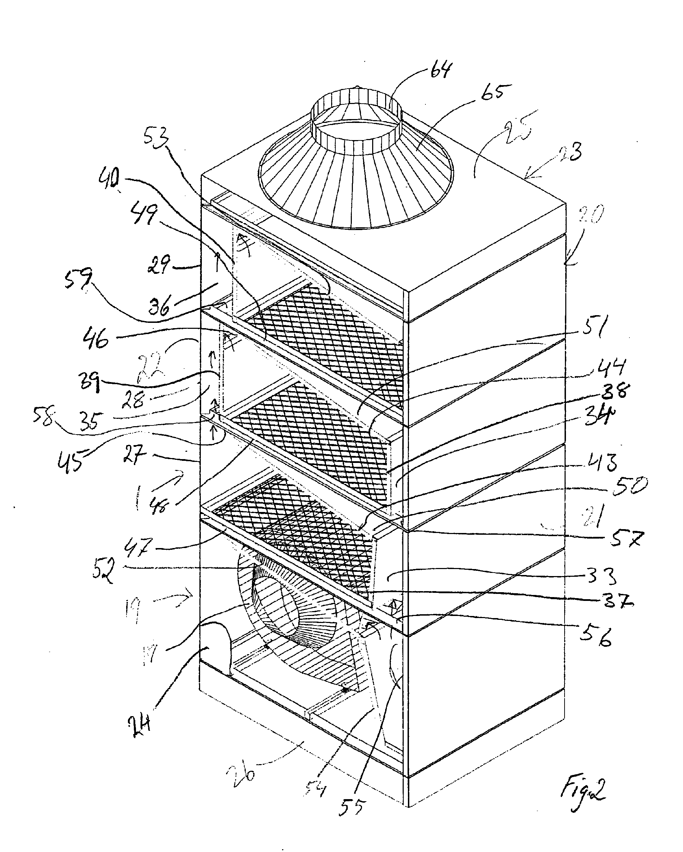

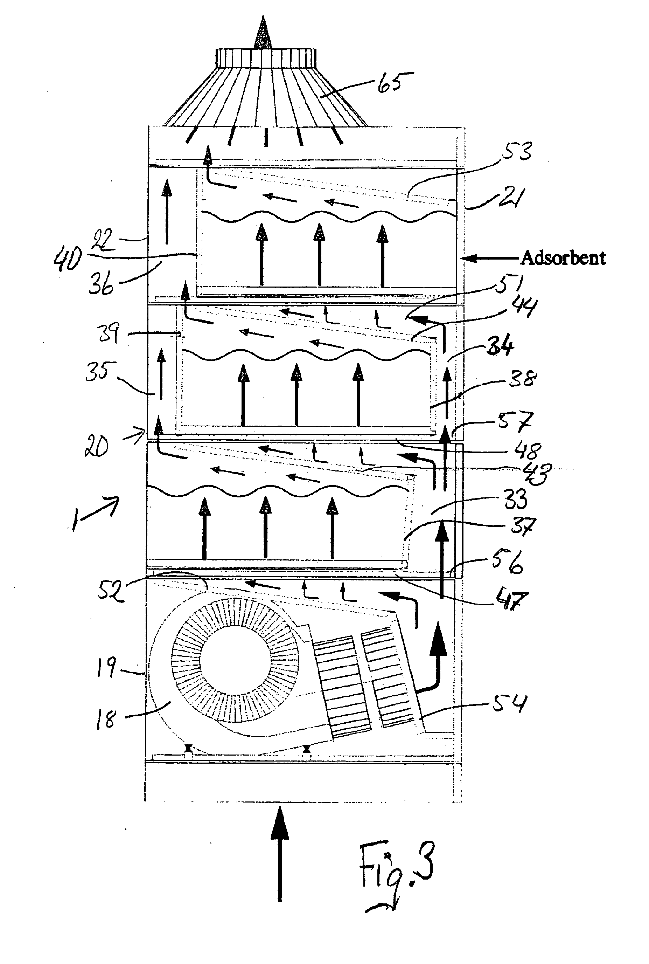

As will be seen from Fig. 1, the air-cleaning system comprises one or more filtering units 1 with fine filters for high-quality cleaning of air, which in principle can be recirculated in a virtually closed system. In practice, however, there is a controlled exchange of a certain proportion of the air with the outside air. Examples of the structure of a filtering unit 1 are described in more detail below with reference mainly to Fig. 2 and Fig. 3. The system comprises an intake air side 2 for intake of air to each room 3, 4, 5, in the form of a number of air ducts 6, 7, 8, for example so-called spiral pipes, which are branched such that intake air can pass directly into each room via intake air openings 9, 10, 11, with at least one opening per room. The openings are designed as intake air devices and are advantageously configured with nozzles or distributors having adjustable opening slits, such that the air is distributed uniformly across the room with a selected flow. According to the invention, the intake air devices 9, 10, 11 are placed high up in each room, preferably in the ceiling 12 or high up on a wall, while the exhaust air from the room is collected as low down as possible, near the floor 13. The system therefore has an exhaust air side 14 with a number of air ducts 15 which each begin with a respective exhaust air opening 16 as exhaust air device, one or more for each room, and are brought together to form an exhaust air duct or return duct 17 to the filtering unit 1, which can be placed at a suitable location in the building, for example on a bottom storey, as shown. Each exhaust air device preferably comprises a coarse filter or pre-filter for collecting coarser particles, dust, etc., which often gathers at or near floor level.

To create the air circulation, i.e. the air flow in the system and through the unit 1, an air blower assembly 18 with a large capacity and a large duct area is provided in order to permit a strong flow with low speed. As in the example shown, the blower assembly is advantageously integrated in the filtering unit 1 and forms a blower level or blower section 19 at the bottom of the unit, as can be seen from Figures 2 and 3. In the example, the blower is of the radial blower type, its inlet or outlet advantageously being provided with a pre-filter or coarse filter for further collection of residual large particles before the air is conveyed onward to the fine filters.

The filtering unit 1 will now be described in more detail, referring mainly to Figures 2 and 3. It is constructed as a closed cabinet with a box-shaped housing 20 or casing with four plane opposite side walls 21, 22, 23, 24 forming parallel pairs, and with a top part 25 and a bottom part 26. The housing is made up of a number of levels or sections, of which the lowermost is the blower section 19. Each section can be a separate unit that can be stacked on top of lower units.

Above the blower section, there are three filter sections 27, 28 and 29 or levels, each with a fine filter 30, 31, 32, for example in the form of a carbon filter bed with a large surface area and high-quality filtering performance. In order to better illustrate the mechanical structure, however, the filter material in the filter bed has not been depicted in Fig. 2. By virtue of the uniform structure of the housing 20, all the sections have a uniform outer cross-sectional shape and uniform dimensions as regards the horizontal cross sections through each level.

As will be seen from Figures 2 and 3, the filters are essentially rectangular in their horizontal cross section but have different dimensions and positions. Nevertheless, each filter, in the vertical direction as seen in Fig. 3, extends over the full depth of the housing between two of the opposite side walls. In the transverse direction in the plane of the paper in Fig. 3, the filters are consistently shorter than the space between the two opposite side walls 21, 22 and leave space for bypass ducts 33, 34, 35, 36 for passage of air past one filter section or two sections. These ducts, which are here referred to as bypass ducts for simplicity, are separated from the filters 30, 31, 32 by means of partition walls 37, 38, 39, 40, 41, 42. The bypass ducts are of two types, namely bypass ducts 33, 34 of a first type which allow uncleaned air to flow past one or more filter sections in order to guide the air flow to the underside of one of the filters that are located above. They are located in the lowermost filter section 27 and in the next above filter section 28. Bypass ducts 35, 36 of a second type allow cleaned air to flow past filter sections located above. In the example, they are present in the middle section 28 and in the upper section 29. The middle section thus includes both types of bypass ducts 34, 35, one on each side of the middle filter. The four partition walls 37-40 are upright, i.e. have a substantially vertical extent when viewed from the side, optionally with a slight inclination, two of the partition walls 37, 38 being shorter than the intermediate space between two section planes and merging, in the lower filter section and middle section, into two horizontal, obliquely inclined partition walls 43, 44, which end at the underside of an edge 45, 46 of the respective filter located above. The filters 30, 31, 32 are each supported by openworked carriers 47, 48, 49, which in practice are designed as gratings that form inlets of large surface area for uncleaned air. The inclined partition walls 43, 44 in the lower filter section 27 and in the middle section 28 separate ducts 50, 51 for admission to or removal from the filters in these sections. Corresponding inclined partition walls 52, 53 are present below the lower filter 30 and above the upper filter 32 in order to create an inlet duct and outlet duct, respectively, for the filters. The lower inclined partition wall 52 is located in the blower section 19 and defines the inlet duct together with a partition wall 54 that has an opening 55 to which the outlet of the blower is connected.

Between each section there are through-openings 56, 57, 58, 59 to allow the air to flow from the section underneath to the bypass ducts 33, 34, 35, 36. Under the top part 25, there is an outlet section 60 with a partition wall 61 which has an opening 62 above the upper bypass duct 36 and an opening 63 above the upper partition wall 42. The opening 63 allows the cleaned air to flow from the upper filter. In this way, all the filtered air is collected at the top of the housing and driven onward through an outlet opening 64 in the top part and, via a conical portion 65, arrives at the intake air side of the duct system.

By means of the structure described above, an installation with fine filters is obtained which has a very large filter surface and takes up the least possible space in the premises. This is achieved by the fact that the three filters are coupled in parallel, such that the air driven by the blower is guided in three parallel air currents up through each of the filters and balanced such that the flow is uniform. The balance is achieved through the choice of the cross-sectional surface area of the air ducts, in respect of which the positioning of the partition walls 37-42 for separate bypass ducts 33-36 is of great importance. An important factor for the capacity of each filtering unit 1 is the housing with a chosen transverse dimension viewed horizontally, and starting from this area it is possible to create balance in the air flow through the choice of filter size, which is advantageously the same for all the filters, and through the positioning of the partition walls, i.e. seen in the side view according to Fig. 3 the positioning of the partition walls is chosen in the lateral direction of the rectangular cross section of the bypass ducts 33, 34, 35, 36 with a fixed depth which is essentially equal to the distance between the opposite side walls 23, 24. As is clear from the example, the bypass ducts 33, 36 in the lower filter section 27 and in the upper filter section 29 have a considerably larger cross-sectional surface area than each of the two bypass ducts 34, 35 in the middle section 28, preferably of the order of magnitude equal to the sum of the two bypass ducts 34, 35.

In summary, a main flow from the blower section 19 is divided up into subsidiary flows, such that a subsidiary flow in the lowermost section 27 passes through the lowermost filter and is made to pass between the filter 31 in the middle section 28, or it is alternatively allowed to bypass the middle filter and passes through the upper filter 32.

The subsidiary flow that passes through the lower filter 30 bypasses the middle filter in the middle section and the upper filter in the upper section. The subsidiary flow through the middle filter bypasses the upper filter. Two of the subsidiary flows from the middle section flow together in the common bypass duct 36 in the upper section 29 and are combined, above the latter, with the subsidiary flow from the upper filter 32 and conveyed to the common outlet from the filtering unit 1 to the intake air side 2 in the system.

The pipe system outside the filtering unit 1 is also dimensioned for a balanced air flow. The ventilation flow outside the filtering unit is also parallel, i.e. the rooms are connected in parallel. To achieve an optimal flow, different pipe dimensions are used as regards the cross-sectional surface area, such that on the intake air side 2 the pipe dimension in individual rooms is less than in certain parts with supply to several rooms.

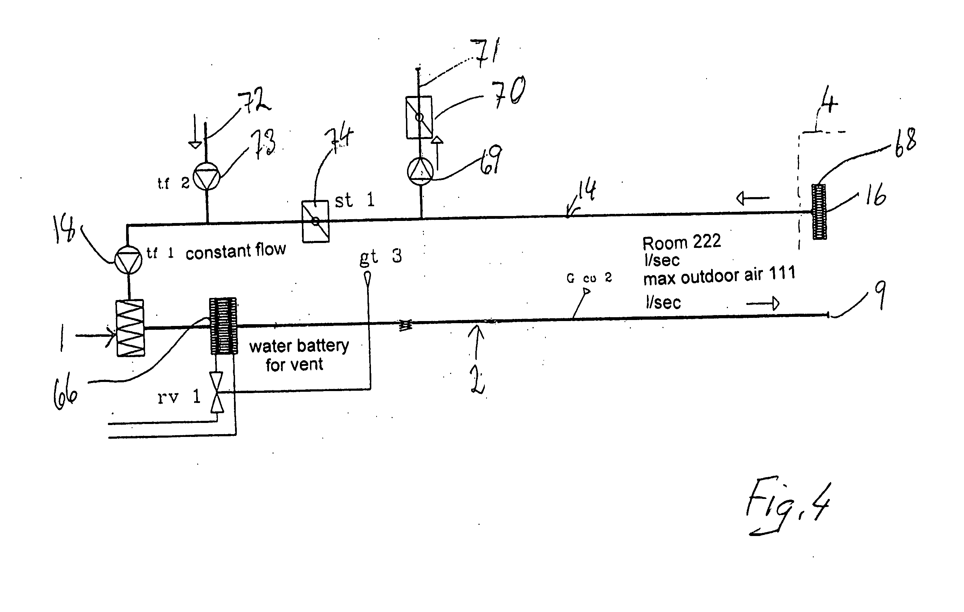

Fig. 4 shows a block diagram of an example of a ventilation system in which the air-cleaning system according to the invention can be included. The system can advantageously be integrated with a heating/cooling system and form a complete air-conditioning system. For this purpose, the system can include a heating/cooling unit 66, for example downstream of the filtering unit 1, and can either be integrated in the same housing or separately. For example, the heating/cooling unit can be designed as a cartridge that is part of the housing. The heating can be provided by a water battery with heated water, for example by a heat pump and heat exchanger, alternatively by electric heating. In the example, a regulating valve 67 is shown which is controlled by a thermostat, which can be an outdoor thermostat, possibly in combination with one or more indoor thermostats. The blower in the system can be a blower 18 with a constant flow. The main flow is a closed flow from the intake air side 2 into each of the rooms 4, of which one is shown schematically in Fig. 4. The air flows in at the top of the rooms through the opening 9, which can be an adjustable air valve, and leaves the rooms at the bottom via the exhaust air opening 16, preferably provided with a coarse filter 68.

On the exhaust air side 14, most of the flow is returned to the suction side of the main blower 18, while a varying smaller proportion is conveyed out into the environment, preferably via a blower 69 and a damper valve 70 in an outlet duct 71. In a corresponding manner, fresh air from the environment is admitted via an inlet duct 72 and a blower 73 to the suction side of the main blower 18. The main flow not exchanged passes through a controlled damper valve 74, which interacts with other units in the air exchange. This can be controlled by several parameters, for example carbon monoxide on the exhaust air side 14 is detected by a sensor in the air duct downstream of the rooms, but the outer and inner temperatures can also control the air exchange, which for economic reasons should be kept low when there are large temperature differences between outdoor air and indoor air or in the event of poor air quality outdoors, although high quality of the indoor air should be ensured, for which a low carbon monoxide content is a measure.

The filters in the filtering unit 1 are advantageously composed of high-quality adsorbent carbon particles assembled in three box-shaped beds, which each rest on carriers 46, 47, 48. The carbon granules are of Feneron, for example, which is able to separate, from the air flows passing through each filter 30, 31, 32, very small particles and materials, even odors, gases, radon, etc. By virtue of the passage of air transversely through the horizontal filters with a large filtering surface area, the flow rate through the filters can be kept low, thus resulting in a high degree of filtering. The structure of the unit 1 thus results in an extremely large filter surface in relation to the cross-sectional surface area of the inlet and outlet 64. The large surface area of each filter means that the tendency to clogging is reduced and the useful life of the filters is prolonged.

The invention is not limited to the examples described above and shown in the drawing, and instead it can be varied within the scope of the appended claims. For example, different dimensions and angles can be used, for example as regards the walls between filters and air ducts. A good starting point, however, is that the housing should be given a standard size and that, if a greater flow capacity is required, two, three or more filtering units are used which are coupled in parallel, for example simply positioned alongside one another and coupled to the intake air side and exhaust air side of the system. In special cases with extremely high demands on the degree of filtering, it is conceivable to couple the units in series. Both the inlet and also the outlet of the housing can be placed at the bottom and the top, respectively, of one of the side walls. For the sake of simplicity, the expression unfiltered air is used, which means air that may be coarse-filtered but is not filtered in fine filters. The housing can be provided with insulation in the outer walls, and there are inner walls in the housing which instead form some of the walls of the air ducts in the filtering unit.

## Claims

1. An air-cleaning system designed for one or more rooms (3, 4, 5) in a building and comprising at least one filtering unit (1), and a blower assembly (18) for driving the air through a number of filters (30, 31 , 32) in the filtering unit or units and for circulating filtered air via intake air ducts (6, 7, 8) and intake air openings (9, 10, 11) through said rooms and via exhaust air openings (16) and exhaust air ducts (15) back to the filtering unit or units, and with a controlled distribution/exchange with outdoor air via inlet and outlet ducts (72, 73), each filtering unit (1) being designed with a box-shaped housing (20) and closed side walls (21-24) and with an inlet (55) for uncleaned air at the bottom and an outlet (64) for cleaned air at the top, wherein
the intake air openings (9, 10, 11) are placed at a high level in or near the ceiling (12) in each room (3, 4, 5), and the exhaust air openings (16) are placed at a low level near the floor (13) in each room, such that the air current is made to flow through the room from the top downward,
the side walls (21-24) of the housing form outer walls for air ducts (33, 34, 35, 36) in the filtering unit (1), for air currents between the inlet and outlet of the unit and for passage through the filters, which are designed with three sections above one another,
each filter section extends essentially between two of the side walls,
the side walls are arranged opposite each other in pairs and parallel in pairs, each filter section has, on the one hand, partition walls (37, 38, 43, 44) which separate each filter and bypass ducts (33, 34) of a first type for carrying an uncleaned air current to filters located above, and, on the other hand, partition walls (39, 40) which separate bypass ducts (35, 36) for cleaned air, which has passed through filters lying below, from filters lying above, as a result of which the air currents can be made to pass in parallel flows through the respective filter,
the filter sections comprise a lower filter section (27), above this a middle section (28), and an upper filter section (29),
the lower filter section of the filtering unit comprises a first bypass duct (33) for unfiltered air, the middle section comprises a second bypass duct (34) for conveying uncleaned air to the filter in the upper filter section, and a third bypass duct (35) for conveying cleaned air from the filter in the lower filter section, and the upper filter section comprises a bypass duct (36) which, on the one hand, constitutes a continuation of the third bypass duct for cleaned air in the middle section and, on the other hand, is designed to bypass cleaned air from the filter in the middle section, and wherein
the partition walls (37-39, 43, 44) in the lower filter section (27) and middle section (28) comprise an upright partition wall (37, 38) which merges into an inclined partition wall (43, 44) that extends below the filter in the section above and is connected to an edge thereof.

2. The air-cleaning system as claimed in claim 1, wherein the cross-sectional surface area of each of the first and fourth bypass ducts (33, 36) is of an order of magnitude equal to the sum of the cross-sectional surface areas of the second and third bypass ducts (34, 35) in the middle filter section (28).

## Patentansprüche

1. Luftreinigungssystem, welches für einen oder mehrere Räume (3, 4, 5) in einem Gebäude ausgelegt ist und zumindest eine Filtrationseinheit (1) und eine Gebläseanordnung (18) zum Lenken der Luft durch eine Anzahl von Filtern (30, 31 , 32) in der Filtrationseinheit oder -einheiten und zum Umwälzen gefilterter Luft über Ansaugluftkanäle (6, 7, 8) und Ansaugluftöffnungen (9, 10, 11) durch die Räume und über Abluftöffnungen (16) und Abluftkanäle (15) zurück in die Filtrationseinheit oder -einheiten umfasst, und mit einem gesteuerten Verteilen/Austausch mit Außenluft über Einlass- und Auslasskanäle (72, 73), wobei jede Filtrationseinheit (1) mit einem kastenförmigen Gehäuse (20) und geschlossenen Seitenwänden (21-24) und mit einem Einlass (55) für ungereinigte Luft am Boden sowie einem Auslass (64) für gereinigte Luft am obersten Teil ausgebildet ist, wobei
die Ansaugluftöffnungen (9, 10, 11) auf einer hohen Ebene in oder in der Nähe der Decke (12) in jedem Raum (3, 4, 5) angeordnet sind, und die Abluftöffnungen (16) auf einer niedrigen Ebene in der Nähe des Fußbodens (13) in jedem Raum angeordnet sind, so dass der Luftstrom dazu veranlasst wird, durch den Raum von oben nach unten hindurchzugehen,
die Seitenwände (21-24) des Gehäuses Außenwände für Luftkanäle (33, 34, 35, 36) in der Filtrationseinheit (1) für Luftströme zwischen dem Einlass und Auslass der Einheit und für den Durchlauf durch die Filter bilden, die mit drei übereinanderliegenden Abschnitten ausgebildet sind,
sich jeder Filterabschnitt im Wesentlichen zwischen zwei der Seitenwände erstreckt,
die Seitenwände in Paaren und parallel in Paaren einander gegenüberliegend angeordnet sind,
jeder Filterabschnitt einerseits Trennwände (37, 38, 43, 44), die jedes Filter und Umleitungskanäle (33, 34) eines ersten Typs zum Tragen eines ungereinigten Luftstroms zu oben angebrachten Filtern trennen, und andererseits Trennwände (39, 40) aufweist, welche Umleitungskanäle (35, 36) für gereinigte Luft, die unten liegende Filter durchströmt hat, von oben liegenden Filtern trennen, wodurch die Luftströme dazu veranlasst werden können, in parallelen Strömen durch das jeweilige Filter hindurchzutreten,
die Filterabschnitte einen unteren Filterabschnitt (27), darüber einen mittleren Abschnitt (28) und einen oberen Filterabschnitt (29) umfassen,
der untere Filterabschnitt der Filtrationseinheit einen ersten Umleitungskanal (33) für nicht filtrierte Luft umfasst, der mittlere Abschnitt einen zweiten Umleitungskanal (34) zum Fördern ungereinigter Luft zum Filter im oberen Filterabschnitt und einen dritten Umleitungskanal (35) zum Fördern gereinigter Luft vom Filter im unteren Filterabschnitt umfasst, und der obere Filterabschnitt einen Umleitungskanal (36) umfasst, der einerseits eine Fortsetzung des dritten Umleitungskanals für gereinigte Luft im mittleren Abschnitt bildet und andererseits zum Umleiten gereinigter Luft vom Filter im mittleren Abschnitt ausgebildet ist, und wobei
die Trennwände (37-39, 43, 44) im unteren Filterabschnitt (27) und mittleren Abschnitt (28) eine aufrechte Trennwand (37, 38) umfassen, die in eine geneigte Trennwand (43, 44) übergeht, die sich unterhalb des Filters im Abschnitt darüber erstreckt und mit einem Rand davon verbunden ist.

2. Luftreinigungssystem nach Anspruch 1, wobei die Querschnittsfläche jedes des ersten und vierten Umleitungskanals (33, 36) in einer Größenordnung liegt, die der Summe der Querschnittsflächen des zweiten und dritten Umleitungskanals (34, 35) im mittleren Filterabschnitt (28) gleich ist.

## Revendications

1. Système de purification de l'air conçu pour une ou plusieurs pièces (3, 4, 5) dans un bâtiment et comprenant au moins une unité de filtration (1), et un ensemble de soufflante (18) pour entraîner l'air à travers un certain nombre de filtres (30, 31, 32) dans l'unité ou les unités de filtration et pour faire circuler de l'air filtré par l'intermédiaire de conduits d'admission d'air (6, 7, 8) et des ouvertures d'admission d'air (9, 10, 11) à travers lesdites pièces et par l'intermédiaire des ouvertures d'échappement d'air (16) et des conduits d'évacuation d'air (15) de retour à l'unité ou aux unités de filtration, et ayant une distribution commandée/un échange commandé avec de l'air extérieur par l'intermédiaire de conduits d'entrée et de sortie (72, 73), chaque unité de filtration (1) étant conçue avec un boîtier en forme de boîte (20) et des parois latérales fermées (21-24) et avec une entrée (55) pour de l'air non nettoyé à la partie inférieure et une sortie (64) pour de l'air purifié à la partie supérieure,
les ouvertures d'admission d'air (9, 10, 11) étant placées à un niveau élevé dans ou près du plafond (12) dans chaque pièce (3, 4, 5), et les ouvertures d'échappement d'air (16) étant placées à un niveau bas à proximité du plancher (13) dans chaque pièce, si bien que le courant d'air est amené à s'écouler à travers la pièce du haut vers le bas,
les parois latérales (21-24) du boîtier formant des parois extérieures pour des conduits d'air (33, 34, 35, 36) dans l'unité de filtration (1), pour des courants d'air entre l'entrée et la sortie de l'unité et pour le passage à travers les filtres, qui sont conçus avec trois sections l'une au-dessus de l'autre,
chaque section de filtre s'étendant essentiellement entre deux des parois latérales,
les parois latérales sont disposées l'une en face de l'autre par paires et parallèles deux à deux,
chaque section de filtre comportant, d'une part, des parois de séparation (37, 38, 43, 44) qui séparent chaque filtre, et des conduits de dérivation (33, 34) d'un premier type pour transporter un courant d'air non nettoyé à des filtres arrangés en haut, et, d'autre part, des parois de séparation (39, 40) qui séparent des conduits de dérivation (35, 36) pour de l'air purifié, qui a traversé les filtres se trouvant au-dessous, à partir de filtres se trouvant au-dessus, à la suite de quoi les courants d'air peuvent être amenés à passer dans les flux parallèles à travers le filtre respectif,
les sections de filtre comprenant une section inférieure de filtre (27), au-dessus de celle-ci une section intermédiaire (28) et une section supérieure de filtre (29),
la section inférieure de l'unité de filtration comprenant un premier conduit de dérivation (33) pour de l'air non filtré, la section intermédiaire comprenant un deuxième conduit de dérivation (34) pour transporter de l'air non nettoyé au filtre dans la section supérieure de filtre, et un troisième conduit de dérivation (35) pour transporter de l'air purifié du filtre dans la section inférieure de filtre, et la section supérieure de filtre comprenant un conduit de dérivation (36) qui, d'une part, constitue une continuation du troisième conduit de dérivation pour de l'air purifié dans la section intermédiaire, et d'autre part, est conçu pour dériver de l'air purifié du filtre dans la partie intermédiaire, et
les parois de séparation (37-39, 43, 44) dans la section inférieure de filtre (27) et la section intermédiaire (28) comprenant une paroi de séparation droite (37, 38) qui se prolonge par une paroi de séparation inclinée (43, 44) qui s'étend au-dessous du filtre dans la section au-dessus et est reliée à un bord de celle-ci.

2. Système de purification de l'air selon la revendication 1, dans lequel la zone de surface en coupe transversale de chacun des premier et quatrième conduits de dérivation (33, 36) est d'un ordre de grandeur égal à la somme des zones de surface en coupe transversale des deuxième et troisième conduits de dérivation (34, 35) dans la section intermédiaire de filtre (28).
